# FASCICULE DE BREVET EUROPEEN

(11) **EP 1 529 722 B1**
(45) Date de publication et mention de la délivrance du brevet: **22.08.2007**
(21) Numéro de dépôt: 04370030.1
(22) Date de dépôt: 14.10.2004
(51) Int. Cl.: B62D 49/06, B62D 49/08

(54) **Dispositif d'écartement des deux roues d'un même essieu**
Spurstellvorrichtung für Räder einer selben Achse
Adjustable tread device for wheels of the same axle

(30) Priorité: 07.11.2003 FR 0313137
(43) Date de publication de la demande: 11.05.2005
(73) Titulaire: Hardi-Evrard, 77176 Savigny le Temple (FR)
(72) Inventeur: Guesdon, Alain, 77123 Noizy sur Ecole (FR)
(74) Mandataire: Hennion, Jean-Claude

(56) Documents cités:
- WO-A-84/00729
- GB-A- 2 311 967
- US-A- 2 936 034
- US-A- 3 899 037
- US-A- 4 109 747
- US-A- 4 241 803

## Description

La présente invention concerne le domaine des véhicules automobiles, notamment des véhicules destinés aux travaux agricoles. Elle concerne plus particulièrement un dispositif apte à réaliser l'écartement des deux roues d'un même essieu d'un véhicule notamment lorsqu'il se déplace sur un terrain mouvementé.

La possibilité de faire varier la voie d'un véhicule, c'est-à-dire l'écartement des deux roues d'un même essieu, est particulièrement appréciable pour les véhicules qui sont amenés à se déplacer sur des terrains mouvementés, notamment des véhicules agricoles du type tracteurs ou pulvérisateurs. En effet, l'augmentation de la voie permet d'augmenter la stabilité du véhicule, par rapport à celle qu'il aurait dans sa configuration normale. De plus s'agissant notamment d'un véhicule agricole muni d'une rampe de pulvérisation, celui-ci est amené à se déplacer à travers les cultures en empruntant des traces ayant un écartement prédéterminé. Cet écartement varie selon les cultures et selon les champs. Il importe donc que l'opérateur puisse faire varier l'écartement des roues du véhicule pour s'adapter aux conditions pratiques d'utilisation.

On a déjà proposé, notamment par les documents US 4 109 747 et GB 2 311 967 des dispositifs d'écartement des deux roues d'un même essieu d'un véhicule agricole dont le principe repose sur le coulissement transversal des deux barres à l'extrémité desquelles sont montées les deux roues de l'essieu. Dans le document US 4 109 747, les deux barres coulissent respectivement dans deux logements, fixés l'un derrière l'autre sur le châssis du véhicule. Dans le document GB 2 311 967, les deux barres sont dans le même alignement transversal, étant montées coulissantes de manière télescopique l'une par rapport à l'autre. Dans ces deux documents, il est prévu un système de tringlerie qui permet de maintenir une relation géométriquement contrôlée entre les deux roues lors de leur pivotement et ce quel que soit le réglage de la largeur de la voie.

Ces dispositifs connus permettant de réaliser l'écartement des deux roues présentent de nombreux inconvénients. Le déplacement mécanique des barres coulissantes par rapport à leur logement respectif dans le brevet US 4 109 747 et l'une par rapport à l'autre dans le document GB 2 311 967 induit nécessairement des problèmes de jeu et des problèmes d'usure. De plus, à moins de réaliser l'écartement des roues sur un terrain totalement plat avec un déplacement du véhicule en ligne droite, on constate durant la phase du changement de voie un effet induit de braquage des roues. Cet effet est d'autant plus important que le terrain est mouvementé.

La présente invention concerne un dispositif d'écartement des deux roues d'un même essieu d'un véhicule, notamment destiné aux travaux agricoles, qui pallie les inconvénients précités des dispositifs connus basés sur le principe d'un coulissement transversal des barres à l'extrémité desquelles sont fixées les deux roues.

Ce dispositif comprend un berceau central solidaire, de préférence à travers une suspension, du châssis du véhicule et pour chaque roue et selon un fonctionnement symétrique par rapport à l'axe longitudinal du châssis :
- un porte-roue,
- un bras porteur du porte-roue,
- une biellette de direction,
- un ensemble basculeur,
- un premier moyen de déplacement angulaire pour l'écartement de la voie,
- et un second moyen de déplacement angulaire pour le changement de direction.
Le bras porteur est d'une part monté à pivotement sur le berceau central au niveau d'un premier axe pivot et d'autre part relié à pivotement au porte-roue selon un second axe pivot. La biellette de direction est d'une part reliée à pivotement au porte-roue selon un troisième axe pivot et d'autre part reliée à pivotement à l'ensemble basculeur selon un quatrième axe pivot. L'ensemble basculeur est monté à pivotement sur le berceau central selon un cinquième axe pivot. Les premier, deuxième, troisième et quatrième axes pivots sont disposés selon les sommets d'un ensemble géométrique formant - par projection dans un plan horizontal - sensiblement un parallélogramme, qui est déformable sous l'action du premier moyen de déplacement pour le réglage de l'écartement de la voie et sous l'action du second moyen de déplacement pour le changement de direction.

Ainsi, selon la disposition particulière du dispositif de l'invention, il n'y a plus de coulissement transversal, mais uniquement des pivotements angulaires par rapport à des axes pivots ce qui ne provoque pas de phénomènes de jeux et d'usure. De plus c'est le même ensemble de pièces, articulées à pivotement, qui permet de réaliser l'écartement des roues et le changement de direction, contrairement aux dispositifs des deux documents précités où l'écartement des roues et le changement de direction étaient obtenus par deux dispositifs indépendants l'un de l'autre.

Certes dans le document US 4 241 803, il est question de quatre axes pivots qui sont disposés selon les sommets d'un ensemble géométrique formant un parallélogramme déformable, mais dans ce document d'une part, il s'agit d'un dispositif destiné au réglage en hauteur du châssis par rapport à la voie et non à l'écartement des roues et d'autre part, ledit ensemble géométrique a la forme d'un parallélogramme par projection dans un plan vertical et non dans un plan horizontal.

Dans le dispositif de la présente invention, le premier moyen de déplacement angulaire est par exemple un premier vérin dit d'écartement, fixé à pivotement d'une part au berceau central et d'autre part au bras porteur.

Le second moyen de déplacement angulaire est par exemple un second vérin dit de direction fixé à pivotement d'une part au berceau central et d'autre part, directement ou indirectement, à l'élément basculeur.

Dans une variante de réalisation, pour chaque roue du même essieu, le premier et le cinquième axes pivots sont confondus, l'ensemble basculeur étant monté à pivotement sur le berceau central selon le même axe pivot que le bras porteur.

Dans une variante de réalisation, il n'y a qu'un seul vérin de direction pour les deux roues du même essieu ; dans ce cas le corps du vérin est fixé au berceau central et l'extrémité de la tige est fixée à l'un des deux ensembles basculeurs, lesquels sont reliés entre eux à pivotement par une biellette de liaison. Ainsi, dans cette variante, l'actionnement de l'unique vérin de direction permet de réaliser, de manière concomitante, le pivotement des deux ensembles basculeurs, de manière coordonnée.

La présente invention sera mieux comprise à la lecture de la description qui va être faite d'exemples de réalisation d'un dispositif d'écartement des deux roues d'un même essieu d'un véhicule agricole, illustrés par le dessin annexé dans lequel :
- la figure 1 est une représentation très schématisée et partielle pour une seule roue, du dispositif d'écartement des roues basé sur le seul pivotement angulaire, selon un premier exemple de réalisation dans lequel le premier et le cinquième axes pivots sont indépendants,
- les figures 2 et 3 illustrent l'écartement de la voie (figure 2) et le changement de direction (figure 3) du premier exemple de la figure 1,
- la figure 4 est une représentation très schématisée et partielle pour une voie, du dispositif selon un second exemple de réalisation dans lequel le premier et le cinquième axes pivots sont confondus,
- les figures 5 et 6 illustrent l'écartement de la voie (figure 5) et le changement de direction (figure 6) du second exemple de la figure 4.
- la figure 7 est une représentation en perspective du train avant, incluant le dispositif d'écartement des roues et de changement de direction selon le second exemple ainsi que son système de suspension au châssis du véhicule,
- la figure 8 est une représentation vue de dessous du train avant de la figure 7,

Le dispositif d'écartement des deux roues d'un même essieu qui va être décrit ci-après est principalement destiné aux véhicules pour travaux agricoles du type tracteur ou pulvérisateur pour lesquels il importe de pouvoir régler l'écartement entre les roues en fonction notamment de l'écartement des traces laissées entre les cultures.

Cependant un tel dispositif n'est pas limité à cette seule application et trouvera son intérêt pour tout véhicule nécessitant un réglage de la largeur de voie.

Le dispositif de la présente invention est basé sur le déplacement angulaire par pivotement autour d'axes pivots des différentes pièces qui le constituent.

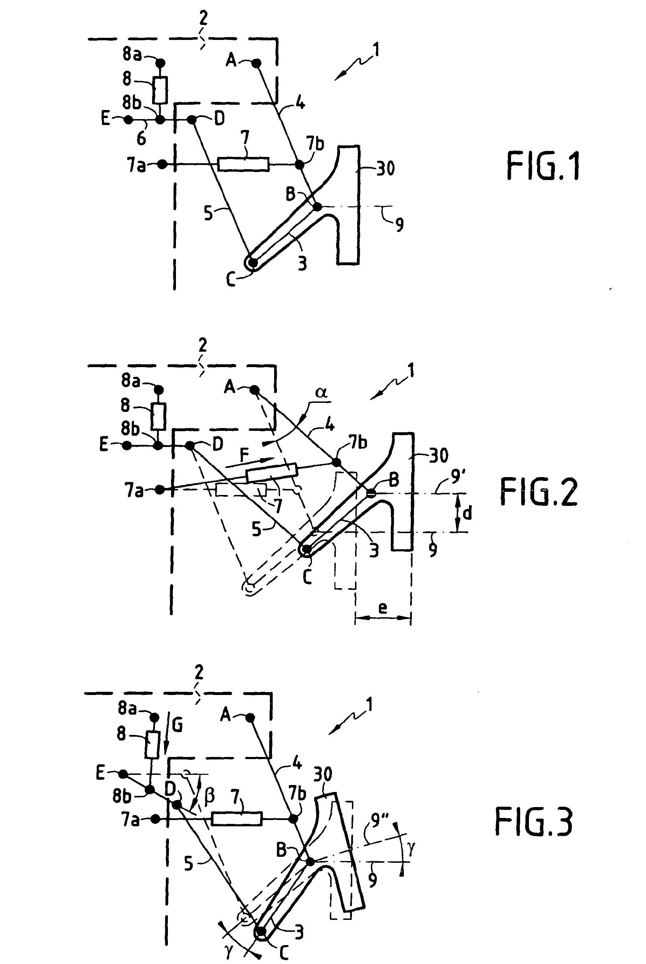

Sur la figure 1 est représenté de manière très schématisée les quatre pièces principales, qui sont articulées les unes aux autres à pivotement ainsi que les deux moyens de déplacement angulaire permettant pour l'une le réglage de la largeur de la voie et pour l'autre le changement de direction. Cette représentation concerne une seule des deux roues du même essieu, étant entendu que l'autre roue comporte les mêmes pièces dont le fonctionnement est strictement symétrique par rapport à l'axe longitudinal LL' du châssis du véhicule, quand bien même la disposition exacte des pièces ne serait pas strictement symétrique par rapport au dit axe.

Le dispositif 1 est monté sur un berceau central 2 qui est fixé soit rigidement soit de préférence par l'intermédiaire d'une suspension sur le châssis du véhicule.

Le dispositif 1 comporte, pour une roue déterminée 14, un porte-roue 3, un bras porteur 4, une biellette de direction 5 et un ensemble basculeur 6. Ces quatre pièces sont articulées les unes aux autres selon quatre axes de pivotement ou axes pivots verticaux A, B, C, D. Sur la figure 1 chacune de ces quatre pièces fondamentales du dispositif 1 est matérialisée par la ligne droite qui relie ses deux axes pivots. Seul a été représenté le porte-roue proprement dit 30 afin que puisse être visualisé plus explicitement le fonctionnement du dispositif en cas d'écartement des roues (figure 2) et en cas de changement de direction (figure 3).

Le bras porteur 4 est d'une part monté à pivotement sur le berceau central 2 au niveau d'un premier axe pivot A et d'autre part relié à pivotement au porte-roue 3 selon un second axe pivot B. La biellette de direction 5 est d'une part reliée à pivotement au porte-roue 3 selon un troisième axe pivot C et d'autre part reliée à pivotement à l'ensemble basculeur 6 selon un quatrième axe pivot D. L'ensemble basculeur est monté à pivotement sur le berceau central 2 selon un cinquième axe pivot E.

La distance séparant les deux axes pivots A et D est égale ou sensiblement égale à la distance séparant les deux axes pivots B et C du porte-roue. De même, la distance séparant les deux axes pivots A et B du bras porteur 4 est égale ou sensiblement égale à la distance séparant les deux axes pivots D et C de la biellette de direction. Ainsi les quatre axes pivots A, B, C et D sont disposés selon les sommets d'un ensemble géométrique formant sensiblement un parallélogramme, lorsqu'il est projeté dans un plan horizontal, qui sur les figures est le plan de la feuille.

Ce parallélogramme est déformable grâce aux deux moyens de déplacement angulaire qui, dans l'exemple illustré, sont deux vérins, le premier vérin d'écartement 7 et le second vérin de direction 8. Le vérin d'écartement 7 est fixé à pivotement en 7a au berceau central 2 et en 7b au bras porteur 4. Le vérin de direction est fixé à pivotement en 8a au berceau central 2 et en 8b à l'ensemble basculeur 6.

Sur la figure 1 est représenté le dispositif 1 dans une position de base avec le porte-roue 3 disposé en sorte que la direction de la roue correspondante soit une direction strictement longitudinale, le véhicule se déplaçant alors en ligne droite.

Sur la figure 2 est représenté le dispositif de la figure 1 lors d'un réglage de la largeur de voie, avec augmentation de l'écartement des deux roues du même essieu. Pour ce faire, le vérin d'écartement 7 est actionné avec la sortie de la tige correspondante, selon la flèche F, ce qui provoque l'écartement des deux points pivots 7a, 7b du vérin 7 et corrélativement, le premier point pivot 7a étant fixe par rapport au berceau central 2, le déplacement du bras porteur 4 par pivotement de celui-ci autour du premier axe pivot A, fixe par rapport au berceau central 2. Pendant ce pivotement angulaire du bras porteur 4 d'angle α, l'ensemble basculeur 6 est maintenu en position du fait du non-actionnement du vérin de direction 8. De ce fait, lors de la déformation du parallélogramme ABCD provoquée par l'action du vérin 7, la direction du porte-roue 3 reste parallèle à la direction de l'ensemble basculeur 6 et donc à celle qu'elle possédait dans la position de base de la figure 1. Ainsi lors de l'opération de réglage de la largeur de voie, les roues conservent la même direction. De plus, comme cela apparaît clairement à l'examen de la figure 2, il y a un déplacement relatif, de distance d, de l'axe 9 de la roue par rapport à son emplacement initial, cet axe 9 se déplaçant vers l'avant d'une position de base à une seconde position 9' dans l'exemple de la figure 2.

A un pivotement angulaire α du bras porteur 4 correspond un déplacement transversal e de la roue.

Sur la figure 3 est représenté un changement de direction par rapport à la position de base du dispositif 1 selon le premier exemple de la figure 1. Ce changement de direction intervient grâce à l'actionnement du vérin de direction 8. Dans l'exemple illustré, cet actionnement correspond à une sortie de la tige du vérin 8 selon la flèche G, entraînant un écartement entre les deux points pivots 8a, 8b et, corrélativement, le premier point pivot 8a étant fixe par rapport au berceau central 2, un éloignement du second point pivot 8b qui est solidaire de l'ensemble basculeur 6. Ainsi l'ensemble basculeur 6 est amené à pivoter angulaire autour du cinquième axe pivot E qui est également fixe sur le berceau central 2, d'un angle β.

Du fait du non-actionnement du vérin d'écartement 7, le pivotement de l'ensemble basculeur 6 ne provoque que la déformation partielle du parallélogramme ABCD, le bras porteur 4 restant en position. Cette déformation partielle entraîne le pivotement angulaire du porte-roue 9 d'un angle γ autour du second axe pivot B. Corrélativement, l'axe 9 de la roue pivote angulairement du même angle γ, passant d'une position 9 à une position 9".

La sortie de la tige du vérin de direction 8 selon la flèche G a permis de faire pivoter la roue, vers la gauche (sur la figure 3), d'un angle γ. La rentrée de la tige du vérin de direction 8, par rapport à la position de base de la figure 1, permettrait de faire pivoter la roue vers la droite.

Dans ce premier exemple de réalisation, le parallélogramme ABCD étant ouvert, sa déformation diffère selon que l'on effectue un écartement de la voie ou un changement de direction. Dans le premier cas, le parallélogramme initial ABCD se déforme en un autre parallélogramme.

Dans le second cas, il se déforme en un quadrilatère. L'angle γ de pivotement de l'axe 9 de la roue diffère de l'angle β de positionnement de l'ensemble basculeur.

Dans le second exemple de réalisation, les premier et cinquième axes pivots sont confondus et correspondent à l'axe pivot A du premier exemple de sorte que le parallélogramme ABCD est fermé et sa déformation est toujours réalisée sous forme d'un autre parallélogramme que ce soit pour l'écartement de la voie ou pour le changement de direction et l'angle de pivotement de la roue est toujours égal à l'angle de pivotement de l'ensemble basculeur, comme cela ressort de l'examen des figures illustrant le second exemple, dans lesquelles les mêmes références ont été conservées.

L'ensemble basculeur 6 est, dans ce second exemple, monté à pivotement sur le berceau central 2 par le premier axe pivot A et relié à pivotement à la biellette de direction 5 par le quatrième axe pivot D.

Lors de l'écartement de la voie (figure 5), l'ensemble basculeur 6 reste fixe en position.

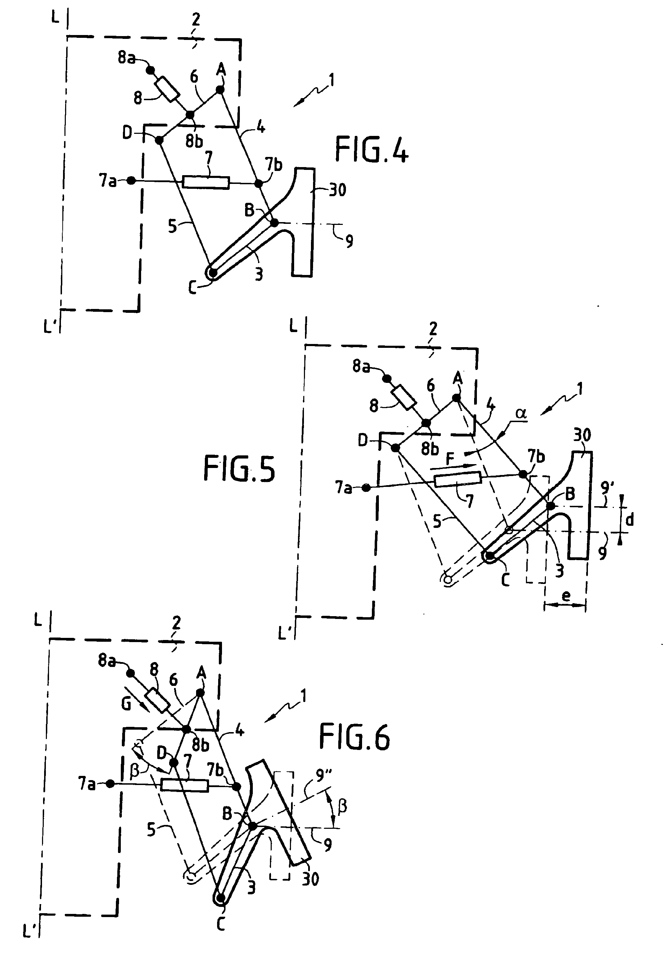

Lors du changement de direction (figure 6), il pivote d'un angle β par rapport au premier axe pivot A et l'axe de la roue 9 pivote du même angle β.

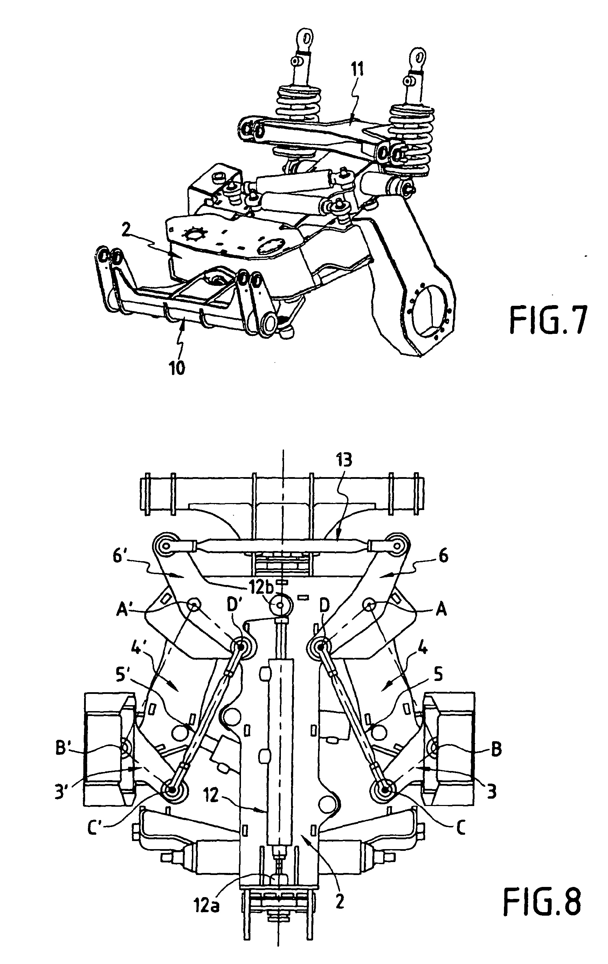

Les figures 7 et 8 sont des représentations réelles des deux dispositifs selon le second exemple, droite et gauche, montés sur le même berceau central 2, lequel est lui-même monté sur le châssis non représenté du véhicule grâce à un système de suspension comprenant un bras de suspension avant 10 et un bras de suspension arrière 11.

Sur la figure 8 qui correspond à la vue de dessous, on a représenté en pointillés les deux parallélogrammes déformables ABCD et A'B'C'D' qui relient les deux jeux de quatre axes pivots.

Dans le mode de réalisation qui est illustré, l'actionnement des deux ensembles basculeurs 6, 6' pour le réglage de la largeur de voie est réalisé par un seul vérin central de direction 12 qui est fixé à pivotement d'une part au niveau du point 12a au berceau central 2 et d'autre part au niveau du point 12b à l'un des deux ensembles basculeurs 6'. Dans ce mode de réalisation, les deux ensembles basculeurs 6, 6' sont eux-mêmes reliés à pivotement par une biellette de liaison 13, selon des axes pivots 15, 15'. Les quatre axes pivots A, 15, 15', A', sont disposés selon un trapèze. Lorsqu'on actionne le vérin central de direction 12 pour le braquage des roues en sorte de rentrer la tige dans le corps dudit vérin, l'ensemble basculeur 6' pivote autour du premier axe pivot A' d'un angle δ', ce qui provoque le pivotement de l'axe de rotation 9' de la roue extérieure du même angle δ' dans le sens des aiguilles d'une montre. Etant donné que la roue extérieure se trouve, sur la figure 8, à gauche du deuxième axe pivot B', le déplacement angulaire d'angle δ' fait se déplacer ladite roue extérieure vers l'avant du berceau central. Le pivotement du second ensemble basculeur 6' se répercute sur le premier ensemble basculeur 6 par l'intermédiaire de la biellette de liaison 13, mais d'un angle δ supérieur à δ', conformément à l'épure de Jenteau. Le premier ensemble basculeur 6 pivote autour de son premier axe pivot A dudit angle δ également dans le sens des aiguilles d'une montre, pivotement qui se répercute de la même manière sur l'axe de rotation 9 de la roue intérieure. Etant donné que la roue intérieure se trouve à droite du second axe pivot D, ladite roue subit, au cours de ce pivotement angulaire d'angle δ dans le sens des aiguilles d'une montre, un déplacement vers l'arrière par rapport au berceau central. Ainsi, la roue intérieure au braquage tourne d'un angle δ qui est plus grand que l'angle δ' de la roue extérieure au braquage.

Dans le mode de réalisation illustré aux figures 7 et 8, le dispositif 1 qui permet de réaliser, à partir des mêmes éléments d'une part le réglage de la largeur de la voie et d'autre part les changements de direction est totalement indépendant du châssis, étant monté sur le berceau central 2 qui n'est relié au châssis du véhicule que par l'intermédiaire du système de suspension. Ainsi l'actionnement du dispositif ne peut en aucun cas être perturbé par les mouvements éventuels du système de suspension. De ce fait, il est possible de changer la largeur de la voie sans provoquer de braquage induit du fait des mouvements de la suspension.

La présente invention n'est pas limitée au mode précis de réalisation qui a été décrit et illustré ci-dessus. En particulier la disposition, dans le parallélogramme déformable, du bras porteur et de la biellette de direction peut éventuellement être inversée, avec dans ce cas, le quatrième axe pivot D qui est monté sur le berceau central 2.

## Revendications

1. Dispositif d'écartement des deux roues d'un même essieu d'un véhicule, notamment destiné aux travaux agricoles, comprenant un berceau central (2) solidaire, de préférence à travers une suspension, du châssis du véhicule et pour chaque roue (14) et selon un fonctionnement symétrique par rapport à l'axe longitudinal (LL') du châssis :
- un porte-roue (3),
- un bras porteur (4) du porte-roue,
- une biellette de direction (5),
- un ensemble basculeur (6),
- un premier moyen (7) de déplacement angulaire pour l'écartement de la voie,
- et un second moyen (8) de déplacement angulaire pour le changement de direction, **caractérisé**
**en ce que** le bras porteur (4) est d'une part monté à pivotement sur le berceau central (2) au niveau d'un premier axe pivot (A) et d'autre part relié à pivotement au porte-roue (3) selon un second axe pivot (B), en ce que la biellette de direction (5) est d'une part reliée à pivotement au porte-roue (3) selon un troisième axe pivot (C) et d'autre part reliée à pivotement à l'ensemble basculeur (6) selon un quatrième axe pivot (D), en ce que l'ensemble basculeur (6) est monté à pivotement sur le berceau central (2) selon un cinquième axe pivot (E, A), et en ce que les premier (A), deuxième (B), troisième (C) et quatrième (D) axes pivots sont disposés selon les sommets d'un ensemble géométrique formant - par projection dans un plan horizontal - sensiblement un parallélogramme, qui est déformable sous l'action du premier moyen (7) de déplacement pour le réglage de l'écartement de la voie et sous l'action du second moyen (8) de déplacement pour le changement de direction.

2. Dispositif selon la revendication 1, **caractérisé en ce que** Le premier moyen de déplacement angulaire est un premier vérin (7) dit d'écartement, fixé à pivotement d'une part au berceau central (2) et d'autre part au bras porteur (4).

3. Dispositif selon l'une des revendications 1 ou 2, **caractérisé en ce que** le second moyen de déplacement angulaire est un second vérin (8) dit de direction fixé à pivotement d'une part au berceau central (2) et d'autre part, directement ou indirectement, à l'élément basculeur (6).

4. Dispositif selon l'une des revendications 1 à 3, **caractérisé en ce qu**e pour chaque roue (14) du même essieu, le premier (A) et le cinquième (E) axes pivots sont confondus, l'ensemble basculeur (6) étant monté à pivotement sur le berceau central (2) selon le même axe pivot (A) que le bras porteur (4).

5. Dispositif selon l'une des revendications 1 à 4, **caractérisé en ce qu'**il n'y a qu'un seul vérin de direction (12) pour les deux roues du même essieu ; le corps du vérin (6') étant fixé au berceau central (2) et l'extrémité de la tige étant fixée à l'un des deux ensembles basculeurs (6, 6'), lesquels sont reliés entre eux à pivotement par une biellette de liaison (13).

## Claims

1. A spacing device for two wheels of the same axle of a vehicle, especially intended for agricultural work, comprising a central cradle (2), integral preferably via suspension with the chassis of the vehicle and for each wheel (14) and according to symmetrical functioning relative to the longitudinal axis (LL') of the chassis:
- a wheel support (3),
- a support arm (4) of the wheel support,
- a directional link (5),
- a rocker assembly (6),
- a first angular shifting means (7) for spacing of the tread, and
- a second angular shifting means (8) for changing direction, **characterised**
**in that** the support arm (4) is mounted to pivot both on the central cradle (2) at the level of a first pivot axle (A) and also connected to pivot on the wheel support (3) according to a second pivot axle (B), in that the directional link (5) is connected to pivot both on the wheel support (3) according to a third pivot axle (C) and also connected to pivot on the rocker assembly (6) according to a fourth pivot axle (D), in that the rocker assembly (6) is mounted to pivot on the central cradle (2) according to a fifth pivot axle (E, A), and in that the first (A), second (B), third (C) and fourth (D) pivot axles are arranged according to the apexes of a geometric assembly substantially forming a parallelogram, when extended in a horizontal plane, which is deformable under the action of the first shifting means (7) for adjusting the spacing of the tread and under the action of the second shifting means (8) for changing direction.

2. The device as claimed in Claim 1, **characterised in that** the first angular shifting means is a first spacing jack (7), fixed to pivot both on the central cradle (2) and also on the support arm (4).

3. The device as claimed in any one of Claims 1 or 2, **characterised in that** the second angular shifting means is a second directional jack (8) fixed to pivot both on the central cradle (2) and also directly or indirectly on the rocker element (6).

4. The device as claimed in any one of Claims 1 to 3, **characterised in that** for each wheel (14) of the same axle, the first (A) and the fifth (E) pivot axles are joined, the rocker assembly (6) being mounted to pivot on the central cradle (2) according to the same pivot axle (A) as the support arm (4).

5. The device as claimed in any one of Claims 1 to 4, **characterised in that** there is only a single directional jack (12) for the two wheels of the same axle, the body of the jack (6') being fixed to the central cradle (2) and the end of the rod being fixed to one of the two rocker assemblies (6, 6'), which are connected to one another to pivot by a connecting link (13).

## Patentansprüche

1. Spurstellvorrichtung der beiden Räder einer Achse eines insbesondere für landwirtschaftliche Arbeiten bestimmten Fahrzeugs, umfassend einen zentralen Korb (2), der vorzugsweise über eine Aufhängung mit dem Gestell des Fahrzeugs verbunden ist, und für jedes Rad (14) und in einer symmetrischen Funktion zur Längsachse (LL') des Gestells:
- einen Radträger (3),
- einen Tragarm (4) des Radträgers,
- eine Lenkstange (5),
- eine Kippeinheit (6),
- ein erstes Winkelverschiebemittel (7) zur Spurstellung,
- und ein zweites Winkelverschiebemittel (8) zur Richtungsänderung,
**dadurch gekennzeichnet, daß** jeder Tragarm (4) einerseits schwenkbar auf dem zentralen Korb (2) im Bereich einer ersten Schwenkachse (A) befestigt und andererseits schwenkbar mit dem Radträger (3) entlang einer zweiten Schwenkachse (B) verbunden ist, daß die Lenkstange (5) einerseits schwenkbar mit dem Radträger (3) entlang einer dritten Schwenkachse (C) und andererseits schwenkbar mit der Kippeinheit (6) entlang einer vierten Schwenkachse (D) verbunden ist, daß die Kippeinheit (6) schwenkbar auf dem zentralen Korb (2) entlang einer fünften Schwenkachse (E, A) befestigt ist, und daß die erste (A), die zweite (B), die dritte (C) und die vierte Schwenkachse (D) entlang der Spitzen einer geometrischen Einheit angeordnet sind, die - auf eine Horizontalebene projiziert - im wesentlichen ein Parallelogramm bildet, das unter der Wirkung des ersten Verschiebemittels (7) zur Spurstellung und unter der Wirkung des zweiten Verschiebemittels (8) zur Richtungsänderung verformbar ist.

2. Vorrichtung nach Anspruch 1, **dadurch gekennzeichnet, daß** das erste Winkelverschiebemittel ein erster Spurstellzylinder genannter Zylinder (7) ist, der schwenkbar einerseits am zentralen Korb (2) und andererseits am Tragarm (4) befestigt ist.

3. Vorrichtung nach einem der Ansprüche 1 oder 2, **dadurch gekennzeichnet, daß** das zweite Winkelverschiebemittel ein zweiter Richtungszylinder genannter Zylinder (8), ist, der schwenkbar einerseits am zentralen Korb (2) und andererseits direkt oder indirekt am Kippelement (6) befestigt ist.

4. Vorrichtung nach einem der Ansprüche 1 bis 3, **dadurch gekennzeichnet, daß** für jedes Rad (14) derselben Achse die erste (A) und die fünfte Schwenkachse (E) zusammenfallen, wobei die Kippeinheit (6) schwenkbar auf dem zentralen Korb (2) entlang derselben Schwenkachse (A) wie der Tragarm (4) befestigt ist.

5. Vorrichtung nach einem der Ansprüche 1 bis 4, **dadurch gekennzeichnet, daß** nur ein einziger Richtungszylinder (12) für die beiden Räder derselben Achse vorhanden ist; wobei der Körper des Zylinders (6') am zentralen Korb (2) befestigt ist und das Ende der Stange an einer der beiden Kippeinheiten (6, 6') befestigt ist, die miteinander schwenkbar durch eine Verbindungsstange (13) verbunden sind.
